# EUROPEAN PATENT SPECIFICATION

(11) **EP 1 408 242 B1**
(45) Date of publication and mention of the grant of the patent: **28.12.2005**
(21) Application number: 03022565.0
(22) Date of filing: 02.10.2003
(51) Int. Cl.: F16B 5/08, F16B 5/01

(54) **Method for building cellular sandwich structure assemblies**
Verfahren zur Herstellung von Anordnungen aus Sandwichstrukturen
Procédé de fabrication d'ensembles à partir de structures en sandwich

(30) Priority: 07.10.2002 FI 20021779
(43) Date of publication of application: 14.04.2004
(73) Proprietor: Oy Mizar AB, 20100 Turku (FI)
(72) Inventor: Liski, Marko, 23200 Vinkkilä (FI); Maaranen, Ilpo, 21500 Piikkiö (FI)
(74) Representative: Zipse + Habersack

(56) References cited:
- EP-A- 0 153 463
- FR-A- 1 157 968
- FR-A- 2 557 932
- US-A- 2 576 530
- PATENT ABSTRACTS OF JAPAN vol. 1997, no. 10, 31 October 1997 (1997-10-31) & JP 09 164477 A (KOBE STEEL LTD), 24 June 1997 (1997-06-24)

## Description

The invention relates to a building method according to the preamble of claim 1 and to a cellular sandwich structure produced by applying said method such as described in the document FR-A-1.157.968.

A cellular sandwich structure has extraordinary advantageous strength properties. In many applications the cellular sandwich structure minimises the amount of material required for obtaining a certain level of structural strength. However, the complexity of a cellular sandwich structure may cause trouble, when a cellular sandwich structure is to be extended without giving up its good strength properties. The object of the invention is to provide a new extension technique for cellular sandwich structures, by means of which cellular sandwich structure assemblies can be easily extended while preserving the advantageous strength properties of the structure also in and around the extension area. The invention is particularly applicable on the production of rectilinearly or in angle extended cellular sandwich structures. The object of the invention is obtained in the manner stated in claim 1.

In this specification and in the claims, a cellular sandwich structure means a welded metal structure having two outer surface plates at a distance from each other and being generally mutually parallel. Between the surface plates, there is a core comprising a great number of intermediate walls extending from one surface plate to the other and being inclined, usually in pairs, in opposite directions and being attached at their ends to the surface plates. The inclination angle of the intermediate walls is the smaller angle between the surface plate and the intermediate wall. A recommended inclination angle is at least 40°, preferably at least 45° and at the most 70°, preferably at the most 60°. The core is in many applications best formed as a corrugated plate. Such a core plate can be easily positioned and welded to the surface plates. The corrugations, that is, the folds of the core plate may be basically V-shaped. At both sides, the crests of the V-folds are welded to the surface plates. A too sharp V-fold is disadvantageous, because the crests should have a sufficiently broad attachment surface parallel to the surface plates. That is why the so-called hat-profile is the most favoured fold form. A hat-profile includes V-shaped folds having their crests truncated to a "hat" parallel to the surface plates. The hats form attachment and support portions between the core and the surface plates. The width of the hat is generally, dependent on the distance between the surface plates and on the plate thickness used, 1 to 200 mm. If the distance between the outer sides of the surface plates is *h* and the hat width is *s*, one can in many applications presuppose that *s = qh*, where *q* is about 0,1 to 0,5.

Also a plate corrugated in waveform can be used as a core plate. A typical cellular sandwich structure is made of steel plates having a thickness of 1 to 2 mm, sometimes also of thicker plates, for instance of 4 mm plates. The distance between the outer sides of the surface plates is thereby typically 60 to 80 mm, but is in special applications considerably greater, for instance 1000 mm. The core may have a slightly smaller plate thickness than the surface plates, but generally all plates have the same thickness. In case a cellular sandwich structure is to be used as a horizontal support member that is likely to be subject to loads concentrated to small areas, it might be of advantage to make the upper load carrying surface plate of thicker material than the other plates. In extreme cases, the minimum plate thickness of a cellular sandwich structure is about 0,2 mm and the maximum plate thickness is about 60 mm. In case the core plate thickness is very great, the making of the core as a corrugated plate is not always rational. Then the core may be made from separate plates or beams.

The invention is based on the principle, that cellular sandwich structures that are to be joined are partly superimposed. This means, that the core is made twofold within the joint area. By this means the strength of the joint area is improved without any substantial unfavourable side effects. The only noticeable drawback related to the invention is a slight increase in thickness in the joint area, but this drawback can easily be eliminated.

It is of advantage to design the joint area so, that the areas of attachment of the core to the surface plates run substantially perpendicularly to the direction, in which one cellular sandwich structure element is extended by means of another. In the joining procedure, the cellular sandwich structures will then interlock mutually relatively rigidly, which makes it easier to perform the joining procedure. However, this does in no way exclude that the invention may also be applied in such a case, where the attachment lines of the folds or corresponding portions of the core have another direction. As a matter of strength both uniting ways are basically equal.

Preferably, the joint area, that is, the area from where the one side surface plate has been removed, has its limit at a section, where the core is in contact with and supports a surface plate. Then the surface plates of the cellular sandwich structures to be joined meet at such a support area, which is favourable with respect to structural strength.

If the joint areas are so dimensioned, that they cover at least two folds of the core, preferably at least four folds of the core, a strong and reliable joint is certainly formed. The number of folds in the joint area is generally so chosen, that a small number of folds is used for cellular sandwich structures of great plate thickness, that is, at least 2 mm, whereas considerably greater numbers of folds may be suitable, when the plate thickness is smaller.

If the core structure is made of a plate corrugated in waveform, it is recommendable that the thickness of core plate is chosen from the range 0,2 to 1,5 mm. A hat profile core is recommended, if the plate thickness is greater.

In some cases, it may be of advantage to construct the joint area so, that at the outer border thereof, at least one of the cellular sandwich structure elements to be joined has a zone including only a surface plate and no core. This results in that the core structure in the joint area is not twofold all over. This simplifies the joining procedure somewhat, but the best possible strength is not always obtained in that way.

Within the joint area, the core structure may be modified, preferably by changing its height measured perpendicularly to a surface plate. It is also of advantage to modify the form of the core, so that, within the joint area, the core structures fit together relatively accurately and the surface plates meet substantially on the same level. The modification may take part by changing the height of the core folds and/or by changing the plate thickness of the core. A sufficiently accurate modification results in a joint of favourable appearance and strength. The object of the modification is to eliminate the small disadvantages caused by two-folding the core. The modification is more necessary the greater the core plate thickness is.

If, in the joining phase, not only the surface plates of the cellular sandwich structure elements, but also their cores are attached to one another by welding, preferably at several locations, that is, at the upper and lower crest of each fold, an extremely strong joint is achieved. This can be made by laser welding from the outside of the surface plates.

If cellular sandwich structure elements are to be joined not rectilinearly, but in an angle, it is recommended that the joint area be constructed as a completely separate cellular sandwich structure element. To this element the required extension parts can be joined by applying the joining method of the invention. This simplifies substantially the forming of a complicated joint.

The invention also relates to a cellular sandwich structure assembly that has been produced by applying the production method of the invention.

In the following, some embodiments of the invention are described more in detail, with reference to the attached schematic drawings, in which
- Fig. 1 shows, as a side view, the principle of the joint mode of the invention,
- Fig. 2 shows a later phase of the joining process outlined in Fig. 1,
- Fig. 3 shows another embodiment of the joint mode of the invention,
- Fig. 4 shows the application of the invention in a T-joint.

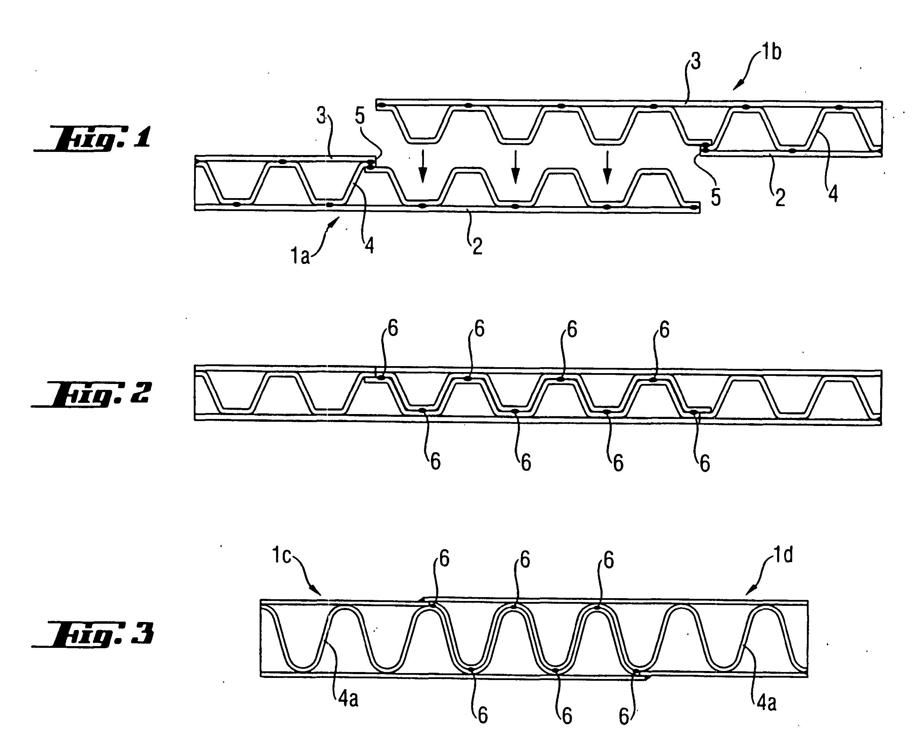

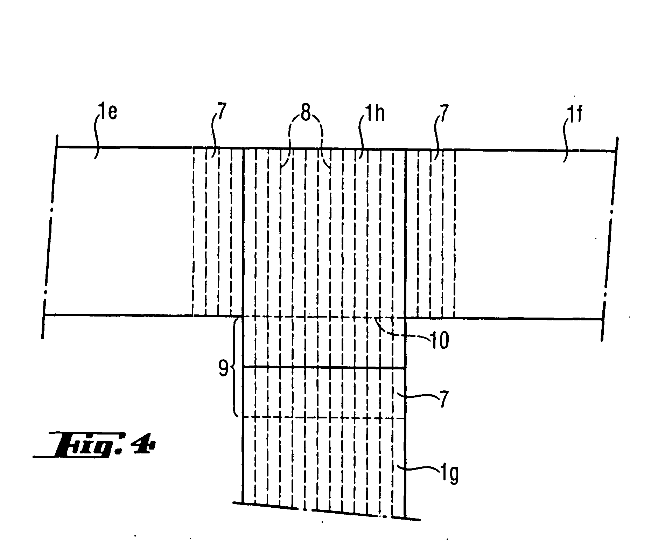

Figs. 1 to 3 show two planar cellular sandwich structure elements 1a and 1b, which are to be joined. These elements have a lower surface plate 2, an upper surface plate 3, and between them, a core 4. In Figs. 1 and 2, the core 4 is formed from a corrugated plate bent in trapezoid folds. In Fig. 3, the core 4 is made from a corrugated plate with wave-formed folds. The crests of the folds, where the core is attached to the surface plates by welding, run perpendicularly to the plane of the Figure. Within the joint area, there is no upper surface plate in the cellular sandwich structure element 1a, and correspondingly, there is no lower surface plate in the cellular sandwich structure element I b. In Figs. 1 and 2, the joint area comprises three complete core plate folds. The limit of the joint area is at section 5, where the core and a surface plate support one another. In the drawings, the thickness of the plates has been somewhat exaggerated.

In Figs. 1 and 2, the form of the folds of the core has been modified within the joint area. Other modifications are feasible as well. In many cases even better result can be obtained by using, within the joint area, a core plate with a smaller plate thickness than elsewhere in the cellular sandwich structure element. The result of a core form modification is visible in Fig. 2, in which the surface plates of the joined cellular sandwich structure elements meet on the same level. In the joint area, the core plates have been attached to one another by welding seams 6 in several areas using laser-welding technique.

Fig. 3 shows a simplified joint, which is suitable when the plate thickness is small, for instance, about 0,7 mm. The core 4a is made of a plate corrugated in waveform and the joint area comprises two complete folds. Within the joint area, the form of the folds has not been modified, but the elements to be joined I c and 1d have been pressed together with a suitable force, until the surface plates have been brought to approximately the same level at the upper and lower side of the elements. In other respects the joining takes part in the same manner as shown in Figs. 1 and 2.

Fig. 4 shows the joining of three planar cellular sandwich structure elements 1e, 1f and 1g to form a T-joint. The joining takes part so that, firstly, a fourth cellular sandwich structure element 1h is constructed, which then is joined to the elements 1e,1f and 1g as has been described. The joint areas are indicated by 7 and the support lines of the core of the elements 1g and 1h by dash lines 8.

The joints 1e -1h and 1f - 1h are made as shown in Figs. 1 to 3. As a result thereof, the support lines 8 of the core do not run crosswise in the joint 1g - 1h as in the joints 1e -1h and 1f - 1h, but lengthways, in the joint direction. Correspondingly, the support lines of the core must also in element 1g run lengthways and not crosswise. A joint of this kind is also in accordance with the invention and functions substantially in the same manner as in the case shown in Figs. 1 to 3. However, limiting the joint area to a section, where the core and a surface plate have a mutual linear support area, is then not possible.

If it is desired, that the support lines of the core run crosswise in all the joints of Fig. 4, the core can, within the area 9 of element 1h, be made so, that its support lines run crosswise to the joint direction. Element 1h then has two different core structures. This does not cause difficulties, because the element 1h is small. The application of the same idea in the elements 1e, 1f and 1g is more difficult, because elements of this kind are often produced as modules of a large system. Reasons related to production technique call for uniform production of the larger elements.

Fig. 4 shows the joining of three elements in the same plane. Because element 1h is an exceptional piece, it can be bent in an angle, for instance, at the line 10, if it is desired, that element 1g should be in another plane than elements 1e and If. By applying the same principle, element 1h may also be so constructed, that all the elements 1e, 1f and 1g are in different planes. In practice it is more common, that only two elements, for instance, elements 1e and 1f, are joined in an angle. Then there is no element 1g, and element 1h may be bent in an angle somewhere in its middle portion.

The invention is not limited to the embodiments shown, but several modifications of the invention are feasible within the scope of the attached claims.

## Claims

1. A method for joining at least two cellular sandwich structure elements, which have surface plates (2, 3) at both sides, and between them a core structure (4) welded to the surface plates, wherein within a border area of a first cellular sandwich structure element (1a), a substantial portion of the element is produced without a surface plate (3) at one side, wherein a second cellular sandwich structure element (1b), having a core structure (4) of substantially the same form as the first cellular sandwich structure element (1a), is, within a corresponding border area, produced without the opposite side's surface plate (2) **characterised in that** these cellular sandwich structure elements (1a, 1b) are welded together, whereby the areas, where the elements have no surface plate at one side, are arranged face to face, to bring the substantially similar core structures (4) into a superimposed interlocking position and to bring the one side surface plate of both the cellular sandwich structure elements (1a, 1b) to cover the area, where the opposite cellular sandwich structure element has no surface plate.

2. A method according to claim 1, **characterised in that**, in the cellular sandwich structure elements (1a, 1b), the core structure (4) is so arranged, that the areas of attachment of the core structure (4) to the surface plates (2, 3) run substantially perpendicularly to the direction, in which one cellular sandwich structure element (1a) is extended by means of another cellular sandwich structure element (1 b).

3. A method according to claim 2, **characterised in that** the portions of the cellular sandwich structures (1a, 1b) with no surface plate at one side, have their inner limits at a section (5), where the core structure (4) supports a surface plate (2, 3).

4. A method according to claim 2 or 3, **characterised in that** the areas, where the cellular sandwich structure elements (1a, 1b) have no surface plate at one side, are so dimensioned, that they cover at least two folds of the core structure (4), preferably at least four folds of the core structure.

5. A method according to any of the preceding claims, **characterised in that**, if the core structure of the cellular sandwich structure elements is formed by a plate (4a) corrugated in wave-form, the plate thickness of this plate is chosen from the range 0,2 to 1,5 mm.

6. A method according to any of the preceding claims, **characterised in that**, at the outer border of the joint area, at least one of the cellular sandwich structure elements to be joined (1a, I b) has a zone including only a surface plate and no core.

7. A method according to any of the preceding claims, **characterised in that**, within the joint areas of both the cellular sandwich structure elements (1a, 1b), the core structure (4) is modified, preferably by changing the height of the core structure measured perpendicularly to a surface plate, and preferably also by changing the core form, so that, within the joint area, the core structures fit together relatively accurately and the surface plates (2, 3) meet substantially on the same level.

8. A method according to any of the preceding claims, **characterised in that**, in the joining phase, the core structures (4) of the cellular sandwich structure elements (1a, 1b) are secured to one another at several locations (6) by means of welding.

9. A method according to any of the preceding claims, **characterised in that**, in a joint area, where at least two cellular sandwich structure elements (1e, 1g; 1f, 1g) are to be joined in an angle, the joint area proper is produced as a separate cellular sandwich structure element (1h), to which required extension parts (1e, 1f, 1g) are joined by applying the joining method of any of the preceding claims.

10. A cellular sandwich structure assembly, **characterised in that** it has been produced by applying the method of any of the preceding claims.

## Patentansprüche

1. Verfahren zum Verbinden von zumindest zwei zellularen Sandwichbauelementen, die zwei Oberflächenplatten (2, 3) auf beiden Seiten und dazwischen eine an die Oberflächenplatten geschweißte Kernstruktur (4) aufweisen, wobei innerhalb eines Randbereichs eines ersten zellularen Sandwichbauelements (1a) ein beachtlicher Teil des Elements ohne eine Oberflächenplatte (3) auf einer Seite und ein zweites zellulares Sandwichbauelement (1b) mit einer Kernstruktur (4) von im Wesentlichen gleicher Form wie beim ersten zellularen Sandwichbauelement (1a) innerhalb eines entsprechenden Randbereichs ohne die Oberflächenplatte (2) auf der gegenüberliegenden Seite produziert ist, **dadurch gekennzeichnet, dass** diese zellularen Sandwichbauelemente (1a, 1b) zusammengeschweißt werden, wobei die Bereiche, wo die Elemente keine Oberflächenplatte auf einer Seite haben, aufeinander angeordnet werden, um die im Wesentlichem gleichen Kernstrukturen (4) in eine übereinander liegende, verzahnende Position zu bringen und um die eine Oberflächenplatte beider zellularer Sandwichbauelemente (1a, 1b) zum Abdecken des Bereichs zu bringen, wo das gegenüberliegende Sandwichbauelement keine Oberflächenplatte hat.

2. Verfahren nach Anspruch 1, **dadurch gekennzeichnet, dass** in den zellularen Sandwichbauelementen (1a, 1b) die Kernstrukturen (4) so angeordnet sind, dass die Bereiche der Befestigung der Kernstruktur (4) an die Oberflächenplatten (2, 3) im Wesentlichen senkrecht zu der Richtung verlaufen, in der das eine Sandwichbauelement (1a) mittels eines anderen zellularen Sandwichbauelements (1b) verlängert wird.

3. Verfahren nach Anspruch 2, **dadurch gekennzeichnet, dass** die Teile der zellularen Sandwichbauelemente (1a, 1b) mit keiner Oberflächenplatte auf einer Seite ihre inneren Begrenzungen an einem Abschnitt (5) haben, wo die Kernstruktur (4) eine Oberflächenplatte (2, 3) stützt.

4. Verfahren nach Anspruch 2 oder 3, **dadurch gekennzeichnet, dass** die Bereiche, wo die zellularen Sandwichbauelemente (1a, 1b) keine Oberflächenplatte auf einer Seite haben, so bemessen sind, dass sie zumindest zwei Faltungen der Kernstruktur (4), vorzugsweise zumindest vier Faltungen der Kernstruktur abdecken.

5. Verfahren nach einem der vorstehenden Ansprüche, **dadurch gekennzeichnet, dass**, wenn die Kernstruktur der zellularen Sandwichbauelemente von einer in Wellenform gebrachten Platte (4a) gebildet wird, die Plattendicke dieser Platte aus dem Bereich 0,2 bis 1,5 mm gewählt ist.

6. Verfahren nach einem der vorstehenden Ansprüche, **dadurch gekennzeichnet, dass** am äußeren Rand des Verbindungsbereichs zumindest eines der zu verbindenden zellularen Sandwichbauelemente (1a, 1b) eine Zone nur mit einer Oberflächenplatte und keinem Kern aufweist.

7. Verfahren nach einem der vorstehenden Ansprüche, **dadurch gekennzeichnet, dass** innerhalb der verbundenen Bereiche beider zellularer Sandwichbauelemente (1a, 1b) die Kernstruktur (4) verändert wird, vorzugsweise durch Ändern der Höhe der Kernstruktur, gemessen senkrecht zu einer Oberflächenplatte und vorzugsweise auch durch Ändern der Kernform, so dass innerhalb des Verbindungsbereichs die Kernstrukturen relativ genau zusammenpassen und die Oberflächenplatten (2, 3) sich auf derselben Ebene treffen.

8. Verfahren nach einem der vorstehenden Ansprüche, **dadurch gekennzeichnet, dass** in der Verbindungsphase die Kernstrukturen (4) der zellularen Sandwichbauelemente (1a, 1b) an mehreren Stellen (6) mittels Schweißen aneinander befestigt werden.

9. Verfahren nach einem der vorstehenden Ansprüche, **dadurch gekennzeichnet, dass** in einem Verbindungsbereich, wo zumindest zwei zellulare Sandwichbauelemente (1e, 1g; 1f, 1g) in einem Winkel zu verbinden sind, der Verbindungsbereich selbst als ein separates zellulares Sandwichbauelement (1h) produziert wird, an das geforderte Verlängerungsstücke (1e, 1f, 1g) angebunden werden, durch Anwendung des Verbindungsverfahrens nach einem der vorstehenden Ansprüche.

10. Zellulare Sandwichbauanordnung, **dadurch gekennzeichnet, dass** sie durch Anwendung des Verfahrens nach einem der vorstehenden Ansprüche produziert worden ist.

## Revendications

1. Un procédé pour assembler au moins deux éléments à structure cellulaire en sandwich qui ont des plaques de surfaces (2,3) sur les deux côtes, et entre eux une structure à noyau (4) soudée aux plaques de surface, où on a réalisé dans une zone de bord d'un premier élément (1a) à structure cellulaire en sandwich une partie essentielle de l'élément sans une plaque de surface (3) sur un côté, où un second élément (1b) à structure cellulaire en sandwich ayant une structure à noyau (4) d'une forme essentiellement similaire à celle de l'élément (1a) du premier élément à structure cellulaire en sandwich , est réalisé dans une zone de bord correspondante sans la plaque de surface (2) latérale opposée, **caractérisé en ce que** ces éléments (1a, 1b) à structure cellulaire en sandwich sont soudés ensemble ; les zones où les éléments n'ont pas de plaque de surface sur un côté étant disposées face à face pour amener les structures à noyau (4) essentiellement similaires dans une position superposée de verrouillage et pour amener la plaque de surface des éléments (1a, 1b) à structure cellulaire en sandwich à recouvrir la zone où l'élément à structure cellulaire en sandwich opposé n'a pas de plaque de surface.

2. Un procédé selon la revendication 1, **caractérisé en ce que** dans les éléments (1a, 1b) à structure cellulaire en sandwich, la structure à noyau (4) est disposée de manière à ce que les zones de fixation de la structure à noyau (4) aux plaques de surface (2, 3) s'étendent essentiellement de manière perpendiculaire à la direction dans laquelle un élément (1a) à structure cellulaire en sandwich s'étend au moyen d'un autre élément (1b) à structure cellulaire en sandwich.

3. Un procédé selon la revendication 2, **caractérisé en ce que** les parties des structures cellulaire (1a, 1b) en sandwich n'ayant pas de plaque de surface, trouvent leur limite à un endroit (5) où la structure à noyau (4) supporte une plaque de surface (2, 3).

4. Un procédé selon la revendication 2 ou 3, **caractérisé en ce qu'**on a dimensionné les zones où les éléments (1a, 1b) à structure cellulaire en sandwich n'ont pas de plaque de surface sur un côté de manière à ce qu'elles couvrent au moins deux plis de la structure à noyau (4), de préférence au moins quatre plis de la structure à noyau.

5. Un procédé selon n'importe laquelle des revendications précédentes, **caractérisé en ce que**, si la structure à noyau des éléments à structure cellulaire en sandwich est formée par une plaque (4a) ondulée en forme d'onde, l'épaisseur de la plaque de cette plaque est choisie dans une zone de 0,2 à 1,5 mm.

6. Un procédé selon n'importe laquelle des revendications précédentes, **caractérisé en ce que** sur le bord extérieur de la zone d'assemblage, au moins un des éléments (1a, 1b) destinés à être joints à structure en sandwich cellulaire a une zone ne comprenant qu'une plaque de surface et aucun noyau.

7. Un procédé selon n'importe laquelle des revendications précédentes, **caractérisé en ce qu'**on modifié la structure à noyau entre les zones d'assemblage des éléments (1a, 1b) à structure cellulaire en sandwich , de préférence en changeant la hauteur de la structure à noyau mesurée de façon perpendiculaire par rapport à la plaque de surface, et de préférence également, en changeant la forme du noyau, de manière à ce que les structures à noyau sont ajustées ensemble de manière relativement précise dans la zone d'assemblage et que les plaques de surface (2, 3) se rencontrent essentiellement au même niveau.

8. Un procédé selon n'importe laquelle des revendications précédentes, **caractérisé en ce que** dans la phase d'assemblage, les structures à noyau (4) des éléments (1a, 1b) à structure cellulaire en sandwich, sont fixées l'une à l'autre à plusieurs endroits (6) par soudage.

9. Un procédé selon n'importe laquelle des revendications précédentes, **caractérisé en ce qu'**une zone d'assemblage où au moins deux éléments (1^{e}, 1g ; 1f, 1g) à structure cellulaire en sandwich doivent être assemblés pour former un angle, la zone d'assemblage principale est réalisée en tant qu'élément (1b) à structure cellulaire en sandwich séparée auquel les parties d' extension (1^{e}, 1f, 1g) sont assemblées en appliquant le procédé d'assemblage de n'importe laquelle des revendications précédentes.

10. Un assemblage à structure cellulaire en sandwich, **caractérisé en ce qu'**il a été réalisé en appliquant le procédé de n'importe laquelle des revendications précédentes.
